**Europäisches Patentamt**

**European Patent Office**

**Office européen des brevets**

(19)

(11) Veröffentlichungsnummer : **0 219 450**
**B1**

(12)

# EUROPÄISCHE PATENTSCHRIFT

(45) Veröffentlichungstag der Patentschrift :
**14.02.90**

(21) Anmeldenummer : **86730137.6**

(22) Anmeldetag : **12.09.86**

(51) Int. Cl.⁵ : **B 01 D   3/42**, G 01 N  25/14

(54) **Vorrichtung zur Vakuumregulierung.**

(30) Priorität : **13.09.85 DE 3533180**

(43) Veröffentlichungstag der Anmeldung :
**22.04.87 Patentblatt 87/17**

(45) Bekanntmachung des Hinweises auf die Patenterteilung : **14.02.90 Patentblatt 90/07**

(84) Benannte Vertragsstaaten :
**CH DE FR LI NL**

(56) Entgegenhaltungen :
**DE--U-- 8 524 023**
**FR--A-- 2 410 818**
**US--A-- 3 577 320**

(73) Patentinhaber : **Gottberg, Rainer**
**Steglitzer Damm 116a**
**D-1000 Berlin 41 (DE)**

(72) Erfinder : **Gottberg, Rainer**
**Steglitzer Damm 116a**
**D-1000 Berlin 41 (DE)**

(74) Vertreter : **Maikowski, Michael, Dipl.-Ing. Dr.**
**Xantener Strasse 10**
**D-1000 Berlin 15 (DE)**

## Beschreibung

Die Erfindung betrifft ein Verfahren und eine Vorrichtung zur Regulierung des Vakuums bei Vakuumdestillationen und eine Vorrichtung zur Durchführung des Verfahrens.

Aus der FR-PS 77 36 251 ist ein Verfahren und ein automatisches Gerät zur Bestimmung des TBP (True Boiling Point) einer zusammengesetzten Vorlage bei der Destillation bekannt. Beispielsweise ist für Rohöl die Siedetemperatur im wesentlichen eine Funktion der destillierten Volumenprozente. Zur Durchführung der Messung ist an einem beheizten Verdampfer, in dem die Temperatur der Vorlage gemessen wird, eine Destillationskolonne angeordnet. Im oberen Abschnitt der Kolonne befindet sich ein Kühler, dessen Temperatur mittels eines Fühlers abgegriffen wird. Unterhalb dieses Kühlers ist ein ventilgesteuerter Verteiler mit einem Abzugsrohr für das Kondensat vorgesehen. Unter diesem befindet sich in der Kolonne ein Temperaturfühler. Das Volumen oder der Durchsatz des durch das Abzugsrohr laufenden Produktes wird während der Destillation gemessen. Derartige Messungen sind für die Verarbeitung von Erdöl verschiedener Herkunft in Raffinerien wichtig. Bei der Messung wird mit dem Temperaturfühler am Kühler die gewünschte Temperatur überwacht. Mit den an den Temperaturfühlern im Heizbad und in der Kolonne abgegriffenen Temperaturen wird manuell ein stationärer, totaler Rückfluß eingestellt.

Bei der Destillation im Vakuum, insbesondere mit Rotationsverdampfern, die in chemischen Laboratorien mit einem Wasserstrahlpumpen-vakuum betrieben werden, tritt das Problem auf, daß infolge der oft niedrigen Siedepunkte der Lösungsmittel im Vergleich zum Wasser eine schlechte Kondensation erfolgt und ein beträchtlicher Anteil über die Wasserstrahlpumpe in das Abwasser gelangt.

Das kann insbesondere bei chlorierten Kohlenwasserstoffen eine erhebliche Umweltbelastung darstellen.

Um die Kondensationsrate für derartige Lösungsmittel zu erhöhen, wird üblicherweise der Druck im Verdampfer durch Regulierung der Wasserstrahlpumpe so weit abgesenkt, bis ein zur Trennung ausreichend niedriger Siedepunkt erreicht ist. Die manuelle Vakuumregulierung mit der Wasserstrahlpumpe über Hähne oder Ventile ist unbefriedigend.

Es sind Geräte bekannt, bei denen das Endvakuum frei einstellbar ist. Aus einer Tabelle wird das Vakuum für das entsprechende Lösungsmittel entnommen. Die Wasserstrahlpumpe wird nur noch zur Korrektur des Vakuums durch eine Ventilsteuerung der Wasserzufuhr eingeschaltet. Durch den Einsatz von Magnetventilen in der Wasserzufuhr zur Wasserstrahlpumpe werden beim Schalten starke hydraulische Stöße in der Wasserleitung erzeugt, die zu Schäden wie z. B. Rohrbrüchen führen können. Ferner sind Fehlbedienungen möglich. Das Vakuum kann zu hoch eingestellt werden, was zu einer schlechten Kondensation führt und Lösungsmittel ins Abwasser gelangen. Diese Geräte sind nur beschränkt einsatzfähig, da beim vorliegen von Lösungsmittelgemischen das Vakuum kontinuierlich dem jeweilig vorliegenden Gemisch angepaßt werden muß. Dies leisten diese Geräte nicht.

Der Erfindung liegt die Aufgabe zugrunde, eine der jeweiligen Zusammensetzung der Vorlage angepaßtes Vakuum zu erzeugen, um eine möglichst vollständige Kondensation des Lösungsmittels zu erreichen.

Erfindungsgemäß wird diese Aufgabe durch das Verfahren nach Patentanspruch 1 und die Vorrichtung nach Patentanspruch 2 gelöst.

Erfindungsgemäß wird der Betrieb eines Magnetventils, das in einer zu einer Vakuumpumpe führenden Vakuumleitung eingeschaltet ist, von Temperaturfühlern über einen elektronisch arbeitenden Regler gesteuert. Dazu wird die Schaltschwelle eines im Dampfraum eines Kühlers einer Vakuumdestillationseinrichtung angeordneten Temperaturfühlers so eingestellt, daß sie geringfügig oberhalb der Referenztemperatur eines die Kühlwassertemperatur ermittelnden, am Kühlwasserzulauf sich befindenden Temperaturfühlers liegt, wobei bei Überschreiten dieser Schaltschwelle das Magnetventil vom Regler geschlossen und beim unterschreiten dieser Schaltschwelle das Magnetventil vom Regler wieder geöffnet wird.

Die Vorrichtung zur Durchführung des Verfahrens besteht aus einem Kühler, einem inmitten des Dampfraumes des Kühlers sich befindenden Temperaturfühlers, der die Temperatur des Dampfraumes ermittelt. Weiter besteht die Vorrichtung aus einem, in der Vakuumleitung des Kühlers eingeschalteten Ventil und einem elektronisch arbeitenden Regler, der das Ventil steuert und in Verbindung mit dem Temperaturfühler steht. Am Kühlwasserzulauf befindet sich ein Temperaturfühler, der die Temperatur des Kühlwassers ermittelt. Der Temperaturfühler steht in Verbindung mit dem Regler. Das Ventil ist ein Magnetventil. Der am Kühlwasserzulauf sich befindende Temperaturfühler hat in vorteilhafter Weise Berührungskontakt mit dem kühlwasserführenden Rohr.

Durch das erfindungsgemäße Verfahren werden die bei den vorstehend beschriebenen Geräten auftretenden hydraulischen Stöße vermieden. Das erfindungsgemäße Verfahren ermöglicht eine automatische Anpassung des Vakuums. Eine Fehlbedienung bei einer Vakuumeinstellung ist nicht mehr möglich. Da durch das erfindungsgemäße Verfahren ein optimales Vakuum eingestellt wird, wird eine hohe Kondensationsrate erreicht, die z. B. bei Methylenchlorid über 95 % liegt.

Mit Vorteil stellt sich das Vakuum automatisch für jedes Lösungsmittel ein, da nur solange evakuiert wird, bis der Siedepunkt des Lösungsmittels bei der herrschenden Badtemperatur erreicht ist. Diese Vorrichtung kann mit Vorteil an jede Vakuumquelle, wie z. B. ein Hausvakuum oder eine Ölpumpe angeschlossen werden.

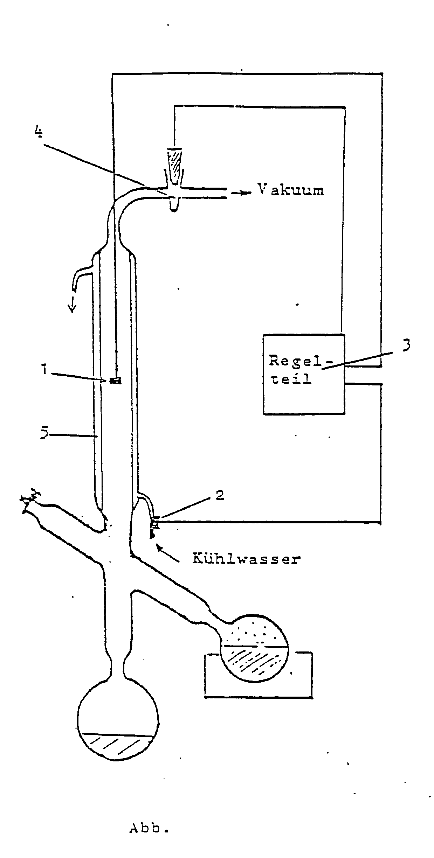

Ein Ausführungsbeispiel der Erfindung soll unter Bezugnahme auf die Zeichnung, die schematisch einen Rotationsverdampfer darstellt, erläutert werden.

Im Dampfraum des Kühlers 5 ist ein Temperaturfühler 1 so eingesetzt, daß er sich etwa in der Mitte des Kühlers 5 befindet. Ein zweiter Temperaturfühler 2 wird als Referenz außerhalb der Apparatur am Kühlwasserschlauch befestigt.

Die Schaltschwelle des Fühlers 1 ist so eingestellt, daß sie geringfügig oberhalb der Referenztemperatur des Fühlers 2 liegt. Diese Schaltschwelle steuert mit dem Regelteil 3 ein in der Vakuumleitung zwischen Wasserstrahlpumpe und Rotationsverdampfer eingesetztes Magnetventil 4 an. Bei Inbetriebnahme der Apparatur ist das Magnetventil 4 offen, da den Temperaturfühler 1 noch keine warmen Lösungsmitteldämpfe erreicht haben. Der Druck im Rotationsverdampfer nimmt ab, und das Lösungsmittel beginnt beim Erreichen seines Siedepunktes in Abhängigkeit von der Badtemperatur zu verdampfen. Zweckmäßig ist eine Badtemperatur von 50-60 C. Die Dampffront des Lösungsmittels beginnt im Kühler 5 zu steigen. Beim Erreichen des Temperaturfühlers 1 wird dieser soweit erwärmt, daß seine Schaltschwelle überschritten wird, das Magnetventil 4 schließt und damit den Rotationsverdampfer vom Vakuum trennt. Bedingt durch Vakuumabfall im Verdampfer sinkt die Dampffront im Kühler 5, der Temperaturfühler 1 kühlt sich wieder ab, öffnet das Magnetventil 4 und der Vorgang beginnt von vorn.

**Patentansprüche**

1. Verfahren zur Regelung des Vakuums bei der Vakuumdestillation dadurch gekennzeichnet, daß

1. der Betrieb eines Magnetventils (4), das in einer zu einer Vakuumpumpe führenden Vakuumleitung eingeschaltet ist, von Temperaturfühlern (1, 2) über einen elektronisch arbeitenden Regler (3) gesteuert wird, daß dazu

2. die Schaltschwelle eines im Dampfraum eines Kühlers einer Vakuumdestillationseinrichtung angeordneten Temperaturfühlers (1) so eingestellt wird, daß sie geringfügig oberhalb der Referenztemperatur eines die Kühlwassertemperatur ermittelnden, am Kühlwasserzulauf sich befindenden Temperaturfühlers (2) liegt,

3. daß bei Überschreiten dieser Schaltschwelle das Magnetventil (4) vom Regler (3) geschlossen wird und daß

4. beim Unterschreiten dieser Schaltschwelle das Magnetventil (4) vom Regler (3) wieder geöffnet wird.

2. Vorrichtung zur Durchführung des Verfahrens nach Anspruch 1 mit einem Kühler, einem inmitten des Dampfraumes des Kühlers sich befindenden, die Temperatur des Dampfraumes ermittelnden Temperaturfühler (1), einem in der Vakuumleitung des Kühlers eingeschalteten Ventil (4) und einem das Ventil steuernden und in Verbindung mit dem Temperaturfühler (1) stehenden elektronisch arbeitenden Regler (3), dadurch gekennzeichnet, daß ein sich am Kühlwasserzulauf befindender, die Temperatur des Kühlwassers ermittelnder Temperaturfühler (2) vorgesehen ist, der in Verbindung mit dem Regler (3) steht, und daß das Ventil ein Magnetventil ist.

3. Vorrichtung nach Anspruch 2, dadurch gekennzeichnet, daß der am Kühlwasserzulauf sich befindende Temperaturfühler (2) Berührungskontakt mit dem Kühlwasser führenden Rohr hat.

**Claims**

1. A process for controlling the vacuum in the vacuum distillation characterised in that

1. the operation of a magnetic valve (4) connected in a vacuum pipe leading to a vacuum pump, is controlled by temperature sensors (1, 2) via an electronically operating controller (3), that also

2. the switching threshold of a temperature sensor (1) arranged in the vapour space of a cooler of a vacuum distillation device is set so that it lies slightly above the reference temperature of the temperature sensor (2) which transmits the cooling water temperature and is located at the outlet of the cooling water,

3. that the magnetic valve (4) is closed by the controller (3) on exceeding the switching threshold and that

4. on falling below this switching threshold the magnetic valve (4) is opened again by the controller (3).

2. Apparatus for carrying out the process according to Claim 1 with a cooler, a temperature sensor (1) located centrally in the vapour space of the cooler to transmit the temperature of the vapour space, a valve (4) included in the vacuum pipe of the cooler and an electronically operating controller (3) controlling the valve and remaining in connection with the temperature sensor (1), characterised in that a temperature sensor (2) which transmits the temperature of the cooling water is located at the cooling water inlet and is in connection with the controller (3), and that the valve is a magnetic valve.

3. Apparatus according to Claim 2, characterised in that the temperature sensor (2) located at the cooling water inlet has direct contact with the pipe carrying the cooling water.

**Revendications**

1. Procédé pour régler le vide au cours d'une distillation sous vide, caractérisé en ce que

1. le fonctionnement d'une vanne magnétique (4) qui est montée dans une conduite de vide menant à une pompe à vide est commandé par des détecteurs de température (1, 2) par l'intermédiaire d'un régulateur électronique (3) ;

2. le seuil de commutation d'un détecteur de température (1) disposé dans la chambre de vapeur d'un réfrigérant d'un dispositif de distillation sous vide est réglé de façon à ce qu'il soit situé légèrement au-dessus de la température de référence d'un détecteur de température (2) se trouvant sur l'adduction d'eau de réfrigération et déterminant la température de celle-ci ;

3. en cas de dépassement de ce seuil de commutation, la vanne magnétique (4) est fermée par le régulateur (3) ;

4. en cas de descente en dessous de ce seuil de commutation, la vanne magnétique (4) est ouverte à nouveau par le régulateur (3).

2. Dispositif pour réaliser le procédé de la revendication 1, avec un réfrigérant, un détecteur de température (1) se trouvant dans la chambre de vapeur du réfrigérant et déterminant la température de la chambre de vapeur, une vanne (4) montée dans la conduite de vide du réfrigérant et un régulateur électronique (3) en liaison avec le détecteur de température (1) et commandant la vanne, caractérisé en ce qu'il est prévu un détecteur de température (2) situé sur l'adduction d'eau de réfrigération et déterminant la température de celle-ci, qui est connecté au régulateur (3) et en ce que la vanne est une vanne magnétique.

3. Dispositif selon la revendication 2, caractérisé en ce que le détecteur de température (2) se trouvant sur l'adduction d'eau de réfrigération est en contact avec le tube transportant l'eau de réfrigération.

Abb.